# EUROPEAN PATENT SPECIFICATION

(11) **EP 1 165 402 B1**
(45) Date of publication and mention of the grant of the patent: **16.07.2003**
(21) Application number: 98957490.0
(22) Date of filing: 13.11.1998
(51) Int. Cl.: B65D 85/57, G11B 23/00, G11B 33/04

(54) **ROSETTE HAVING RADIALLY DEFLECTABLE FINGER ENDS FOR HOLDING DISC SHAPED ELEMENTS**
ROSETTE VERSEHEN MIT RADIAL AUSBIEGBAREN LASCHEN ZUR FESTHALTUNG VON SCHEIBENFÖRMIGEN ELEMENTEN
ROSETTE MUNIE DE LANGUETTES A EXTREMITES POUVANT ETRE DEVIEES RADIALEMENT ET CON UE POUR RETENIR DES ELEMENTS DE TYPE DISQUE

(43) Date of publication of application: 02.01.2002
(73) Proprietor: Westvaco Corporation, New York New York 10171-0074 (US)
(72) Inventor: BOLOGNIA, David, Louis, Lanesboro, MA 01237 (US); RUFO, George, Francis, Jr., Dalton, MA 01226 (US); CORNWELL, Daniel, Edward, Pittsfield, MA 01201 (US)
(74) Representative: Jaunez, Xavier
(86) International application number: US9823249
(87) International publication number: WO00029308

(56) References cited:
- EP-A- 1 026 104
- WO-A-88/06559
- US-A- 5 249 677
- US-A- 5 377 825
- US-A- 5 494 156
- US-A- 5 515 968
- US-A- 5 685 427

## Description

### BACKGROUND OF THE INVENTION

### Cross Reference to Related Applications

This application is a continuation-in-part of pending application Serial No. 08/808,020, filed March 3, 1997.

### Field of the Invention

The present invention relates generally to enclosures for receiving and storing digitally coded discs and, more particularly, to an improved engagement means for holding such discs within such enclosures.

### Description of the Prior Art

Various types of planar discs are in use at the present time to record and store information which is to be retrieved by various means, such as by optical or magnetic means. Typical of such discs are compact discs (CDs) in which information is digitally recorded by use of a laser beam and then read optically by a laser beam. Such discs are used to record audio information, such as musical renditions, video information such as visual images and digital information for use as read only and other memories for use in various applications, such as computer applications. In most instances, at the present time, such discs are sold with information already recorded thereon. In other applications, such discs are sold in blank form and are used by the customer to record information thereon. In the latter case, for example, optical discs are sold for use as computer storage media and are used in hard disc storage systems. In either case, optical imperfections in or on the surfaces of such discs interfere with both the recording and retrieval of information stored on the discs. Care must, therefore, be taken in the storage, moving and handling of such discs to avoid causing any such imperfections.

Compact discs containing laser recorded information are typically packaged in enclosures designed to hold one or more CDs for protecting the discs during storage and shipment. Enclosures commonly used at the present time comprise a three piece assembly consisting of a base or bottom element, an insert or tray in the base/bottom element for positioning and supporting the disc in the base/bottom element, e.g., by a center projection (commonly referred to as a "rosette") which engages the periphery of the aperture in the center of the disc, and a lid or cover which is hinged to the base/bottom element and is closed thereon after the disc is mounted therein on the tray. Other enclosures utilize only two pieces, omit the tray, and position and support the disc via the center projection directly on the base/bottom element. The enclosure is, typically, at least partially transparent and graphics relating to the disc and containing trademark and sales promotional information are usually inserted in such a manner as to be visible through the enclosure.

Most typically, the rosette comprises a raised hub which is formed integrally with the base/bottom element or tray, preferably by injection molding. The hub includes a plurality of small gripping teeth or fingers for radially engaging the central aperture in the CD. Generally, the central aperture of the CD is positioned over the rosette and a slight downward pressure is applied. Due to the relative dimensions of the central aperture and the rosette, the downward pressure causes the gripping teeth or fingers to deflect radially inwardly and to resiliently engage the central aperture of the CD. In this way the rosette engages and secures the CD in place during storage.

It has become conventional for the elements of the CD enclosures to be formed by injection molding. As a consequence the rosettes are formed of the same plastic material as the base or tray with which they are integrally molded. The base and/or tray elements and, therefore, the rosettes have typically been made from pigmented thermoplastic molding resins having sufficient impact resistance to withstand the forces attendant to mounting and unmounting CDs as well as the forces experienced during shipping and handling.

More recently there has arisen a growing demand for additional graphic display space on CD enclosures. As a consequence it has become desirable to provide a clear, see through tray or base so that a larger percentage of graphic area is visible to the consumer. In order to achieve a clear, see through tray or base, a transparent plastic material must be used. One material which has emerged as the material of choice is crystalline polystyrene. Although a functional CD tray or base can be molded with crystalline polystyrene using known injection molding techniques and existing molds without substantial change to the enclosure design, the brittleness of crystalline polystyrene has caused significant problems with the rosette. Specifically, the molded gripping teeth or fingers have evidenced a tendency to fracture and/or break away during mounting and unmounting of the CDs and during shipping and handling operations due to the brittleness of the crystalline polystyrene. This can result in a loss of engagement between the rosette and the central aperture of the CD, allowing the CD to move within the enclosure and to become damaged by impairing the recording media stored thereon. Alternatively, or in addition, the fractured teeth or fingers can become loose and move around in the enclosure, damaging the surface of the CD by scratching the surface and impairing the stored recording media thereon.

The state of the art is illustrated by EP-A-1 026 104, the content of which being only relevant to the question of novelty and in so far as the same Contracting States are designated, pursuant to Article 54(3) and (4) EPC.

This earlier application shows a storage tray comprising a rosette for securing at least one disc shaped element having a central aperture, said rosette comprising a raised circular hub having a substantially cylindrical side wall, said hub projecting upward from a planar base, and several resilient, arcuate, circumferentially extending fingers integrally formed with the hub, the free end of each finger being resiliently deflectable radially inwardly from the perimeter of the hub and also in the axial direction of the hub, whereby the perimetric edge of the disc central aperture engages the fingers when the disc is placed on the hub causing said fingers to move radially inwardly from the perimeter of the hub and also axially downwardly.

Then, such arrangement requires movement of the fingers both radially and axially in order to release a disc mounted thereon. Furthermore, the outer diameter of the fingers is slightly smaller than the diameter of the disc central hole, so that, when pressure on the push button portions of the fingers is released, the fingers are able to resume their rest positions without applying an outward pressure to the central hole of the disc to hold the disc in place, so that the fingers are not designed for resiliently engaging the central hole of the disc.

Efforts have been made to reinforce the teeth or fingers of the rosette. See, for example, US-A-5,515,968 and US-A-5,494,156. However, attempts to redesign the rosettes or to reinforce them suffer from one or more shortcomings which make the resulting rosette either unsatisfactory or not particularly desirable for use in a CD enclosure. Either the rosette is undesirable because it is uneconomical to manufacture or it is unsatisfactory because it remains susceptible to fracture in use and presents substantial risk of damaging the information bearing surface of the disc. Accordingly, there remains a need for a simple, inexpensive to manufacture and easy to use rosette for a CD enclosure which is configured to facilitate safe mounting and unmounting of the disc thereon and which does not present a damage risk for the disc's information bearing surface.

### SUMMARY OF THE INVENTION

It is therefore a primary object of the present invention to provide a rosette for a CD enclosure which permits its manufacture by injection molding using low impact strength plastics, such as crystalline polystyrene, which is configured to facilitate safe mounting and unmounting of the disc thereon and which does not present a damage risk for the disc's information bearing surface.

It is also an object of the present invention to provide an improved rosette for a CD enclosure which is simple, inexpensive to manufacture and easy to use.

It is another object of the present invention to provide a rosette for a CD enclosure which can be formed from a typically brittle plastic material yet which includes sufficiently durable and resilient fingers for safely and effectively engaging the central aperture of a CD for retaining it in place within a CD enclosure.

A further object of the present invention is to provide an enclosure or storage tray for storing and securing at least one CD, said tray having an improved rosette integral therewith.

The foregoing and other objects are achieved in accordance with the present invention by providing engagement means for securing at least one disc shaped element having a central aperture, the engagement means comprising: a) a raised circular hub having a substantially cylindrical side wall, the hub projecting upward from a planar base; b) at least one resilient, arcuate, circumferentially extending finger integrally formed with the hub and extending along the perimeter of the hub, the or each finger being formed integrally with the hub at one end and free at the other end, the free end of said finger being resiliently deflectable radially inwardly from the perimeter of the hub in a plane parallel to the base with substantially no deflection of said finger in the axial direction of the hub; c) whereby the perimetric edge of the disc central aperture engages said at least one finger when the disc is placed on the hub causing the finger to move radially inwardly from the perimeter of the hub with no substantial axial movement of said finger to allow the disc central aperture to slide downwardly over the hub, said finger resiliently engaging the perimetric edge of the disc central aperture to hold the disc in place on the hub, according to claims 1 and 16.

Desirably, the engagement means further includes a radially extending protrusion on the free end of each finger projecting outwardly beyond the outside diameter of the hub for engaging a bottom perimetric edge of the disc central aperture when the disc is placed on the hub for causing the fingers to move arcuately inwardly, the protrusions being adapted to resiliently engage a top perimetric edge of the disc central aperture after the disc slides downwardly over the protrusions for removably securing the disk onto the hub. In addition, the engagement means also includes at least one aperture defined in the base, the number of apertures corresponding to the number of the fingers, the fingers being arranged so that the free ends thereof overhang the apertures for permitting the free ends to substantially unobstructedly deflect when the disc is inserted on the hub. The rosette of the invention can be further strengthened by providing at least one rib molded on the underside of each finger adjacent the fixed end thereof for reinforcing the finger without inhibiting the flexibility and freedom of movement of the free end of the finger.

### BRIEF DESCRIPTION OF THE DRAWINGS

FIGURE 1 is a perspective view of one embodiment of the improved rosette of the present invention.
FIGURE 2 is a plan view of the improved rosette of FIGURE 1.
FIGURE 3 is a sectional view taken along line 3-3 of FIGURE 2.
FIGURE 4 is a perspective view of another embodiment of the improved rosette of the present invention.
FIGURE 5 is a plan view of still another embodiment of the improved rosette of the present invention.
FIGURE 6 is a sectional view taken along line 6-6 of FIGURE 5.
FIGURE 7 is a perspective view of the underside of the improved rosette of FIGURE 5.
FIGURE 8 is a plan view of yet another embodiment of the improved rosette of the present invention.
FIGURE 9 is a sectional view taken along line 9-9 of FIGURE 8.

### DESCRIPTION OF THE PREFERRED EMBODIMENT

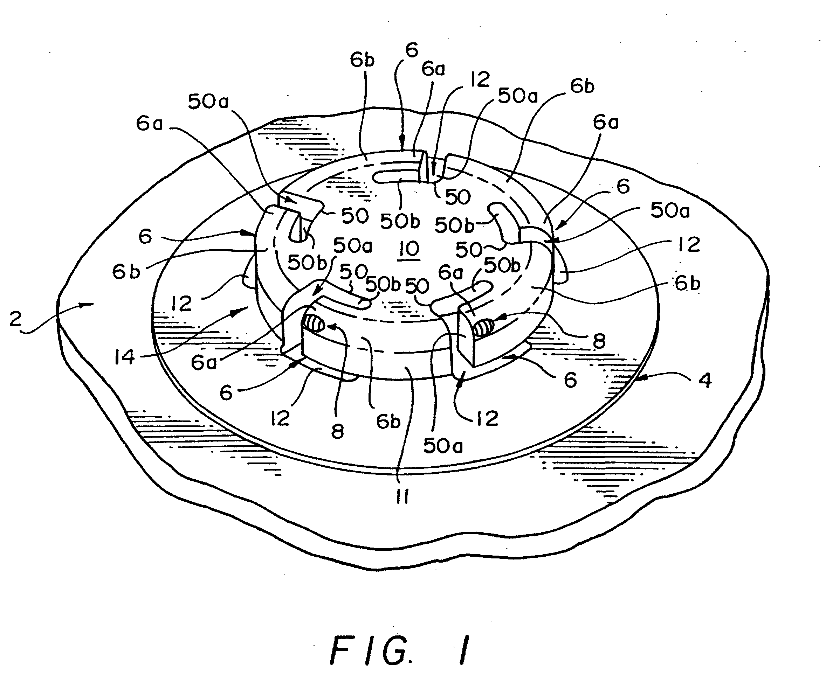

A preferred embodiment of the present invention is illustrated in FIGURES 1, 2 and 3 in which there is illustrated an improved rosette or mounting hub 14 for a CD enclosure. Rosette 14 is generally positioned in the same location within CD enclosures as prior art rosettes, i.e., generally centrally located on the insert or tray of three piece enclosures or on the base of two piece enclosures. Desirably, rosette 14 is molded integrally with the base or tray of the enclosure. In the embodiment of FIGURES 1-3, rosette 14 is molded on raised CD seat 4 which, itself, is molded on tray or base 2. Raised seat 4 provides a circular surface on which the annular area of the CD which is immediately adjacent the central disc aperture can be supported above the base 2. This area of the CD typically contains no recorded information and, therefore, contact between the CD in this area and the raised seat will not damage the CD. The CD may optionally be peripherally supported at its outer edges which also, typically, contains no recorded information in order to provide further assurance that contact of the recorded areas of the CD with either the base or tray or the cover of the CD enclosure will be avoided. Extending upward from disc seat 4 is rosette 14 which is essentially a vertical cylindrical section divided by generally L-shaped slits 50 into a plurality of arcuate, circumferentially extending fingers 6. Each L-shaped slit in rosette 14 has a first leg slit 50a extending generally radially through circumferential side wall 11 of rosette 14 and a short distance across top wall 10 and a second leg slit 50b in the top wall 10 extending, from the end of the first leg slit, generally parallel to the circumferential side wall 11 of the rosette 14. In this way each L-shaped slit defines a circumferentially extending finger 6 having a radial thickness defined by the radial distance between side wall 11 and second leg slit 50b and a circumferential length defined by the length of second leg slit 50b. Each finger 6 is formed integrally with the rosette 14 at one end 6b and is free at the other end 6a. The free end 6a of each finger 6 overlies an opening 12 defined in raised seat 4 on which rosette 14 is positioned to allow free movement of the free end in an arcuate direction, i.e., generally toward the geometric center of rosette 14. Each of the fingers 6 is associated with each of the openings 12. Although five fingers and five openings are illustrated, it will be appreciated that any number of fingers and corresponding openings may be located at more or less regularly spaced intervals along the circumference of rosette 14. Preferably, rosette 14 comprises at least two fingers 6 and corresponding openings 12. Most desirably, rosette 14 comprises at least four fingers 6 and corresponding openings 12. The openings 12 may of any desirable or convenient shape consistent with their function which is to allow the free ends 6a of fingers 6 to deflect unobstructedly in response to a deforming force. Inasmuch as ends 6b of fingers 6 are integrally formed with the rosette, ends 6b are secured while ends 6a are free to pivot or otherwise deflect in a plane parallel to base 2 in response to the force applied during mounting of a CD.

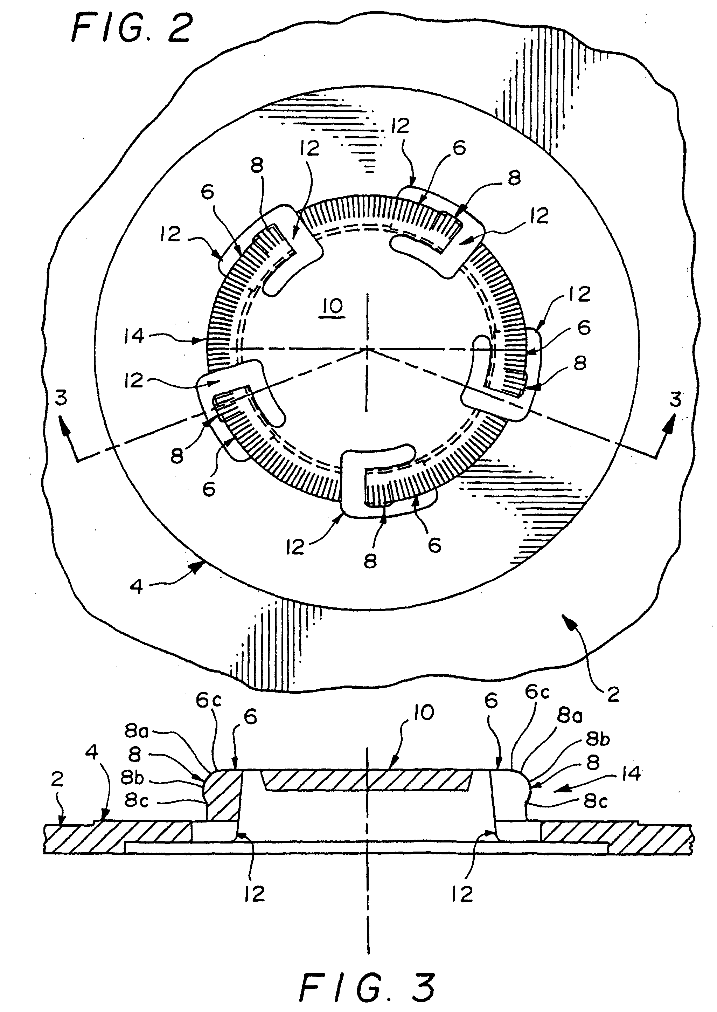

At the free end 6a of each finger 6 a protrusion 8 is formed which extends radially outwardly beyond the outer diameter of the rosette 14 with fingers 6 in their rest position and extends circumferentially along side wall 11 from the free end 6a toward fixed end 6b. As can be seen in FIGURE 2, protrusion 8 desirably extends circumferentially only a short distance along side wall 11 although it may extend a greater distance, up to the entire circumferential length of finger 6, if desired. With reference to FIGURE 3, it will be seen that in a vertical plane, such as A-A', protrusion 8 is formed as a complex curve gently extending from the outward and downward curvature of the radially outer edges 6c of the axial top surface of finger 6. Protrusion 8 extends outwardly and downwardly from merge point 8a with finger top surface outer edges 6c, along side wall 11 to curve apex 8b and then inwardly and downwardly to the point 8c where protrusion 8 merges with side wall 11. A protrusion configured generally in this manner provides a guide curvature which allows the CD to slip easily over rosette 14.

The outer diameter of rosette 14 measured to the radial edges of fingers 6 is slightly larger than the diameter of the disc central aperture. Protrusions 8 extend radially outwardly from the radial edges of the fingers which makes the outer diameter at the protrusions even larger than the outer diameter of the rosette 14. In use, the free ends 6a of fingers 6 deflect slightly inwardly from their rest position toward the center of rosette 14 under pressure from the perimetric edge of the central disc aperture in contact with protrusions 8 as the CD is fitted over the fingers onto the rosette. Pressure exerted as the CD is pressed vertically over the fingers 6 into contact with radial outer edge of the finger top surface 6c and the protrusions 8 between upper merge point 8a and apex 8b causes displacement of the free ends 6a of the fingers 6 radially inwardly along an inwardly directed arc. Thus, the effective diameter of the rosette temporarily decreases to accommodate the somewhat smaller diameter of the disc central aperture. After the disc has passed apex 8b of protrusions 8, fingers 6 begin to resiliently return toward their rest position. When the disc has passed merge point 8c, the side wall 11 of rosette 14 engages the perimetric edge of the disc central aperture to securely hold the disc in position. At this point, because rosette outer diameter is slightly larger than the diameter of the disc central aperture, the fingers 6 have not completely returned to their rest position and are, therefore, resiliently biased against and applying a light, secure, outward directed pressure to the perimetric edge of the disc central aperture. When the disc is fully seated on raised seat 4, it is securely held in place on rosette 14 by the radially outward directed pressure of the resilient fingers 6 and by the pressure of protrusions 8 along the upper surface of the perimetric edge of the disc central aperture. Removal of the disc from rosette 14 is accomplished simply by exerting a light upward pressure to the edge of the disc. The pressure of the disc against the protrusions between merge point 8c and apex 8b again causes displacement of the free ends 6a of the fingers 6 radially inwardly along an inwardly directed arc. Thus, the effective diameter of the rosette again temporarily decreases to accommodate the somewhat smaller diameter of the disc central aperture. After the disc has passed apex 8b of protrusions 8, a light continued upward pressure causes it to break free of rosette 14. The rosette of the present invention may, if desired, be of such a height that two or more CD's can be securely supported thereon, for example, one above the other.

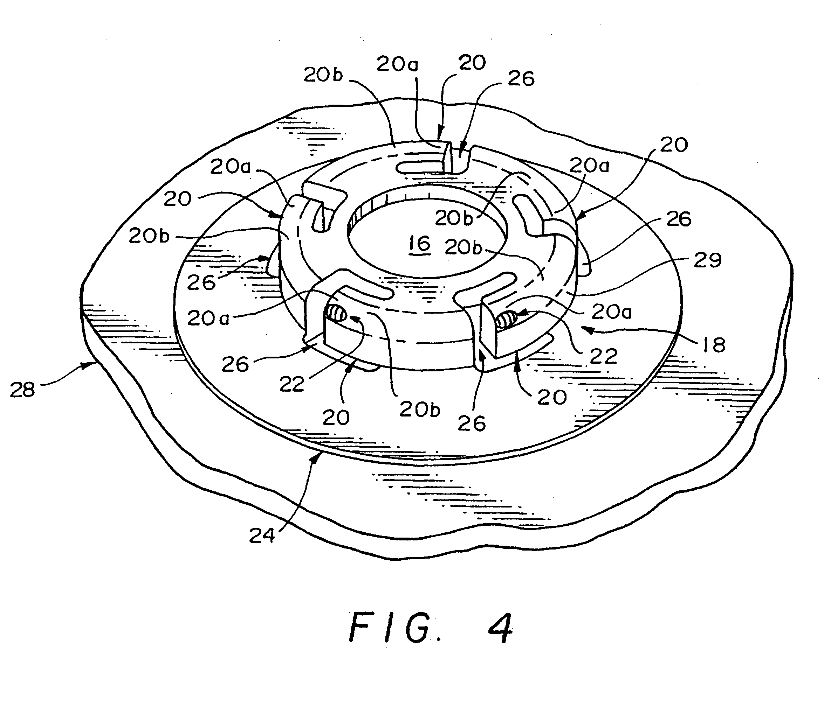

A second embodiment of the rosette of the present invention is illustrated in FIGURE 4 which is identical to the rosette 14 of FIGURES 1-3 except that in FIGURE 4 rosette 18 is essentially a vertical cylindrical section having a central opening 16 in the center thereof. More specifically, rosette 18 extends upward from disc seat 24 which, in turn, is raised from base or tray 28. Rosette 18 comprises a plurality of arcuate, circumferentially extending fingers 20, the free end 20a of each of which overlies a corresponding opening 26 in raised seat 24. At the free end 20a of each finger 20 a protrusion 22 is formed which extends radially outwardly beyond the outer diameter of the fingers 20 in their rest position and extends circumferentially along side wall 29 of rosette 18 from the free end 20a toward fixed end 20b of fingers 20. In use, as with rosette 14, the free ends 20a of fingers 20 deflect slightly inwardly from their rest position toward the center of rosette 18 under pressure from the perimetric edge of the central disc aperture in contact with protrusions 22 as the CD is fitted over the fingers onto the rosette. Pressure exerted as the CD is pressed vertically over the fingers 20 causes displacement of the free ends 20a of the fingers 20 radially inwardly along an inwardly directed arc to temporarily decrease the effective diameter of the rosette to accommodate the somewhat smaller diameter of the disc central aperture. After the disc has passed the apex of protrusions 22, fingers 20 begin to resiliently return toward their rest position until the side wall 29 of rosette 18 engages the perimetric edge of the disc central aperture to securely hold the disc in position.

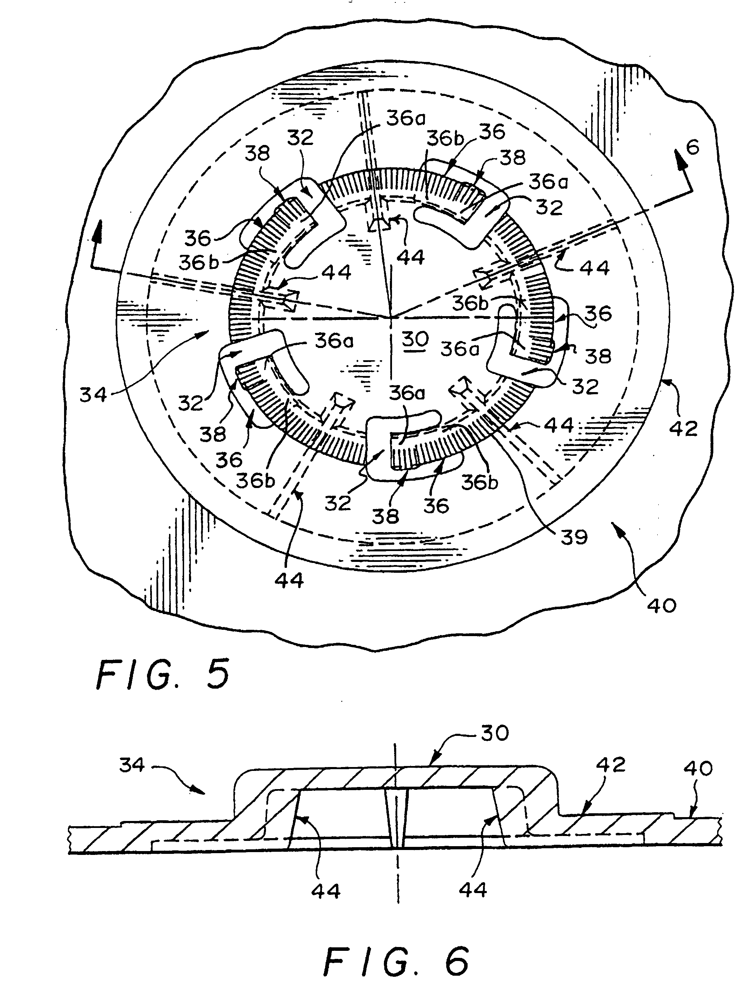

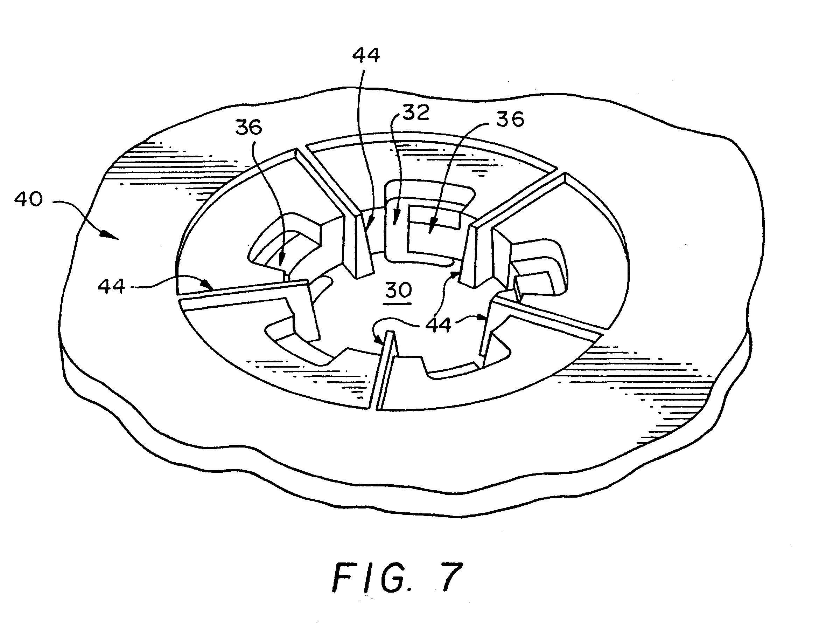

A third embodiment of the rosette of the present invention is illustrated in FIGURES 5-7 which is identical to the rosette 14 of FIGURES 1-3 except that in FIGURES 5-7 rosette 34 includes a plurality of ribs 44 integrally molded on the underside of each finger 36. More specifically, rosette 34 extends upward from disc seat 42 which, in turn, is raised from base or tray 40. Rosette 34 has a closed top wall 30 and comprises a plurality of arcuate, circumferentially extending fingers 36, the free end 36a of each of which overlies a corresponding opening 32 in raised seat 42. At the free end 36a of each finger 36 a protrusion 38 is formed which extends radially outwardly beyond the outer diameter of the fingers 36 in their rest position and extends circumferentially along side wall 39 of rosette 34 from the free end 36a toward fixed end 36b of fingers 36. A molded rib 44 on the underside of each finger 36 is positioned to extend radially through the fixed end 36b thereof from a point radially inward of the inner diameter of fingers 36 to a point radially outward of the outer diameter of fingers 36 in order that it may reinforce each finger without inhibiting the flexibility and freedom of movement of the free end 36a of finger 36. In use, as with rosette 14, the free ends 36a of fingers 36 deflect slightly inwardly from their rest position toward the center of rosette 34 under pressure from the perimetric edge of the central disc aperture in contact with protrusions 38 as the CD is fitted over the fingers onto the rosette. Pressure exerted as the CD is pressed vertically over the fingers 36 causes displacement of the free ends 36a of the fingers 36 radially inwardly along an inwardly directed arc to temporarily decrease the effective diameter of the rosette to accommodate the somewhat smaller diameter of the disc central aperture. After the disc has passed the apex of protrusions 38, fingers 36 begin to resiliently return toward their rest position until the side wall 39 of rosette 34 engages the perimetric edge of the disc central aperture to securely hold the disc in position.

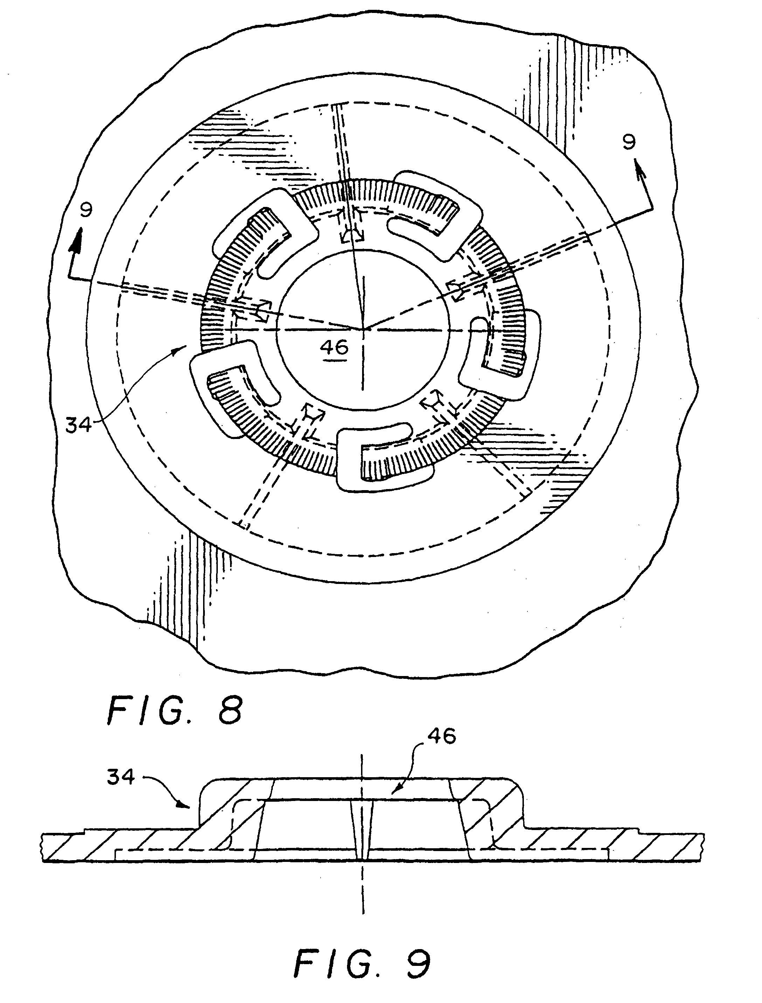

A fourth embodiment of the rosette of the present invention is illustrated in FIGURES 8-9 which is identical to the rosette 34 of FIGURES 5-7 except that in FIGURES 8-9 rosette 34 is essentially a vertical cylindrical section having a central opening 46 in the center thereof.

The present invention is directed not only to the improved rosette described herein but also to an improved insert or tray for securing and storing one or more CDs, which insert or tray is particularly useful as an element of three piece CD enclosures. Typically, such an insert or tray comprises a substantially planar surface from which the improved rosette of the present invention projects upwardly. Desirably, the insert or tray includes a raised circular seat from which the rosette projects and on which the annular area of the CD which is immediately adjacent the central disc aperture can be supported. This area of the CD typically contains no recorded information and, therefore, contact between the CD in this area and the raised seat will not damage the CD. The insert or tray may also include a supporting raised surface for peripherally supporting the CD along its outer edges which also, typically, contain no recorded information and which will not be damaged by contact with the tray. Typically, the rosette of the present invention is positioned in the center of the insert or tray. However, if the insert or tray is substantially larger than the CD, is shaped to store other CDs or items other than CDs, or for other reasons, the rosette need not be positioned in the center of the insert or tray. CD three piece enclosures generally also include a base or bottom element in which the insert or tray may be removably secured and a lid or cover element which is hinged to the base or bottom element and is closed thereon after the disc is mounted therein on the rosette. Where the CD enclosure is of the two piece variety, the tray or insert generally comprises the base or bottom element of the enclosure to which the lid or cover is hinged.

The present invention is desirably employed for molding brittle or low impact resistant clear thermoplastic resins. However, it is equally applicable when any moldable thermoplastic resin, whether clear, translucent, opaque, pigmented, tinted or otherwise, low or high impact resistance, is utilized. The invention is particularly advantageous for the injection molding of crystalline polystyrene and other styrenic polymers, such as copolymers and terepolymers containing styrene copolymerized with other monomers or other brittle polymers.

While the present invention has been described in terms of specific embodiments thereof, it will be understood that no limitations are intended to the details of construction or design other than as defined in the appended claims.

## Claims

1. A disc retaining member for securing at least one disc shaped element having a central aperture, **characterized in that** it comrpises:
a) a raised circular hub (14; 18; 34) having a substantially cylindrical side wall, said hub projecting upward from a planar base (2; 28; 40);
b) at least one resilient, arcuate, circumferentially extending finger (6; 20; 36) integrally formed with said hub and extending along the perimeter of said hub, each finger (6; 20; 36) having a first end (6b; 20b; 36b) formed integrally with said hub and a free end (6a; 20a; 36a) which is disconnected from said hub and base to allow radial deflection thereof, the free end (6a; 20a; 36a) of said at least one finger (6; 20; 36) being resiliently deflectable radially inwardly from the perimeter of the hub (14; 18; 34) in a plane parallel to said base with substantially no deflection of said finger in the axial direction of said hub;
c) whereby the perimetric edge of the disc central aperture engages said at least one finger (6; 20; 36) when the disc is placed on said hub (14; 18; 34) causing said at least one finger (6; 20; 36) to move radially inwardly from the perimeter of the hub (14; 18; 34) with no substantial axial movement of said finger to allow the disc central aperture to slide downwardly over said hub, said at least one finger (6; 20; 36) resiliently engaging the perimetric edge of the disc central aperture to hold the disc in place on the hub (14; 18; 34).

2. A disc retaining member, as claimed in claim 1, wherein each said finger (6; 20; 36) includes a radially extending protrusion (8; 22; 38) on the free end (6a; 20a; 36a) thereof projecting outwardly beyond the outside diameter of said hub (14; 18; 34) for engaging a bottom perimetric edge of the disc central aperture when the disc is placed on the hub (14; 18; 34) for causing said at least one finger (6; 20; 36) to move arcuately inwardly, said protrusion (8; 22; 38) being adapted to resiliently engage a top perimetric edge of the disc central aperture after said disc slides downwardly over said protrusions for removably securing said disc onto said hub.

3. A disc retaining member, as claimed in claim 1, wherein said at least one finger comprises a plurality of fingers (6; 20; 36), and further including a plurality of apertures (12; 26; 32) defined in said base (2; 28; 40), and each finger (6; 20; 36) being arranged so that the free end (6a; 20a; 36a) thereof overhangs a corresponding one of said apertures (12; 26; 32) for permitting said free end to substantially unobstructedly deflect when said disc is inserted on said hub (14; 18; 34).

4. A disc retaining member, as claimed in claim 3, wherein said apertures (12; 26; 32) are located at regularly spaced apart intervals along the circumference of said hub (14; 18; 34).

5. A disc retaining member, as claimed in claim 2, wherein the diameter of said raised circular hub (14; 18; 34) is slightly larger than the diameter of said disc central aperture.

6. A disc retaining member, as claimed in claim 5, wherein the top surface of the free end (6a; 20a; 36a) of each finger (6; 20; 36) adjacent the side wall (10; 29; 39) of the hub (14; 18; 34) is curved outwardly and downwardly.

7. A disc retaining member, as claimed in claim 2, wherein the cross sectional shape of said protrusion (8; 22; 38) in a radially extending vertical plane perpendicular to said base (2; 28; 40) is a curve extending radially outwardly from the top surface of the free end (6a; 20a; 36a) of each finger (6; 20; 36) and downwardly along said side wall (10; 29; 39) to the apex (8b) of the curve and radially inwardly from the apex and downwardly along said side wall until said curve merges with said side wall.

8. A disc retaining member, as claimed in claim 5, wherein the cross sectional shape of said protrusion (8; 22; 38) in a radially extending vertical plane perpendicular to said base (2; 28; 40) is a curve extending radially outwardly from the top surface of the free end (6a; 20a; 36a) of each finger (6; 20; 36) and downwardly along said side wall (10; 29; 39) to the apex (8b) of the curve and radially inwardly from the apex and downwardly along said side wall until said curve merges with said side wall.

9. A disc retaining member, as claimed in claim 3, wherein each said finger (6; 20; 36) includes a radially extending protrusion (8; 22; 38) on the free end (6a; 20a; 36a) thereof projecting outwardly beyond the outside diameter of said hub (14; 18; 34) and the cross sectional shape of said protrusion (8; 22; 38) in a radially extending vertical plane perpendicular to said base (2; 28; 40) is a curve extending radially outwardly from the top surface of the free end (6a; 20a; 36a) of each finger (6; 20; 36) and downwardly along said side wall (10; 29; 39) to the apex (8b) of the curve and radially inwardly from the apex and downwardly along said side wall until said curve merges with said side wall.

10. A disc retaining member, as claimed in claim 1, including at least one generally L-shaped slit (50) in said raised circular hub (14; 18; 34) for defining said at least one circumferentially extending finger (6; 20; 36), the number of L-shaped slits (50) corresponding to the number of said fingers, each said L-shaped slit (50) comprising a first leg slit (50a) extending generally radially through said side wall (10; 29; 39) and a second leg slit (50b) extending, from the end of said first leg slit, generally parallel to said side wall (10; 29; 39), whereby said circumferentially extending finger (6; 20; 36) is defined between said side wall and said second leg slit with said free end (6a; 20a; 36a) adjacent said first leg slit.

11. A disc retaining member, as claimed in claim 1, further including an integrally formed rib (44) on the underside of each finger (36).

12. A disc retaining member, as claimed in claim 11, wherein said rib (44) extends radially through the fixed end of said finger (36).

13. A disc retaining member, as claimed in claim 1, further including at least one aperture (12; 26; 32) defined in said base (2; 28; 40), the number of apertures corresponding to the number of said fingers (6; 20; 36), said fingers being arranged so that the free ends (6a; 20a; 36a) thereof overhang said apertures for permitting said free ends to substantially unobstructedly deflect when said disc is inserted on said hub (14; 18; 34) and wherein each said finger (6; 20; 36) includes a radially extending protrusion (8; 22; 38) on the free end thereof projecting outwardly beyond the outside diameter of said hub (14; 18; 34) for engaging a bottom perimetric edge of the disc central aperture when the disc is placed on the hub for causing said fingers (6; 20; 36) to move arcuately inwardly, said protrusions (8; 22; 38) being adapted to resiliently engage a top perimetric edge of the disc central aperture after said disc slides downwardly over said protrusions for removably securing said disc onto said hub (14; 18; 34).

14. A disc retaining member, as claimed in claim 13, wherein the diameter of said raised circular hub (14; 18; 34) is slightly larger than the diameter of said disc central aperture, wherein the top surface of the free end (6a; 20a; 36a) of each finger (6; 20; 36) adjacent the side wall (10; 29; 39) of the hub (14; 18; 34) is curved outwardly and downwardly and wherein the cross sectional shape of said protrusion (8; 22; 38) in a radially extending vertical plane perpendicular to said base (2; 28; 40) is a curve extending radially outwardly from the top surface of the free end (6a; 20a; 36a) of each finger (6; 20; 36) and downwardly along said side wall (10; 29; 39) to the apex (8b) of the curve and radially inwardly from the apex and downwardly along said side wall until said curve merges with said side wall.

15. A disc retaining member, as claimed in claim 1, including at least four resilient, arcuate, circumferentially extending fingers (6; 20; 36) integral with said hub (14; 18; 34).

16. A storage tray for storing and securing at least one disc shaped element having a central aperture, said tray comprising a substantially planar base having a disc retaining member integral therewith, caracterized in that said member comprises:
a) a raised circular hub (14; 18; 34) having a substantially cylindrical side wall, said hub projecting upward from said planar base (2; 28; 40);
b) at least one resilient, arcuate, circumferentially extending finger (6; 20; 36) integrally formed with said hub and extending along the perimeter of said hub, each finger (6; 20; 36) having a first end (6b; 20b; 36b) formed integrally with said hub and a free end (6a; 20a; 36a) which is separated from said hub and base to allow radial deflection thereof, the free end (6a; 20a; 36a) of said at least one finger (6; 20; 36) being resiliently deflectable radially inwardly from the perimeter of the hub (14; 18; 34) in a plane parallel to said base with substantially no deflection of said finger in the axial direction of said hub;
c) whereby the perimetric edge of the disc central aperture engages said at least one finger (6; 20; 36) when the disc is placed on said hub (14; 18; 34) causing said at least one finger (6; 20; 36) to move radially inwardly from the perimeter of the hub (14; 18; 34) with no substantial axial movement of said finger to allow the disc central aperture to slide downwardly over said hub, said at least one finger (6; 20; 36) resiliently engaging the perimetric edge of the disc central aperture to hold the disc in place on the hub (14; 18; 34).

17. A storage tray, as claimed in claim 16, wherein said at least one finger (6; 20; 36) includes a radially extending protrusion (8; 22; 38) on the free end (6a; 20a; 36a) thereof projecting outwardly beyond the outside diameter of said hub (14; 18; 34) for engaging a bottom perimetric edge of the disc central aperture when the disc is placed on the hub (14; 18; 34) for causing said at least one finger (6; 20; 36) to move radially inwardly, said protrusion (8; 22; 38) being adapted to resiliently engage a top perimetric edge of the disc central aperture after said disc slides downwardly over said protrusion for removably securing said disc onto said hub.

18. A storage tray, as claimed in claim 16, wherein said at least one finger comprises a plurality of fingers (6; 20; 36), and further including a plurality of apertures (12; 26; 32) defined in said base (2; 28; 40), and each finger (6; 20; 36) being arranged so that the free end (6a; 20a; 36a) thereof overhangs a corresponding one of said apertures (12; 26; 32) for permitting said free end to substantially unobstructedly deflect when said disc is inserted on said hub (14; 18; 34).

19. A storage tray, as claimed in claim 18, wherein said apertures (12; 26; 32) are located at regularly spaced apart intervals along the circumference of said hub (14; 18; 34).

20. A storage tray, as claimed in claim 17, wherein the diameter of said raised circular hub (14; 18; 34) is slightly larger than the diameter of said disc central aperture.

21. A storage tray, as claimed in claim 20, wherein the top surface of the free end (6a; 20a; 36a) of each finger (6; 20; 36) adjacent the side wall (10; 29; 39) of the hub (14; 18; 34) is curved outwardly and downwardly.

22. A storage tray, as claimed in claim 17, wherein the cross sectional shape of said protrusion (8; 22; 38) in a radially extending vertical plane perpendicular to said base (2; 28; 40) is a curve extending radially outwardly from the top surface of the free end (6a; 20a; 36a) of each finger (6; 20; 36) and downwardly along said side wall (10; 29; 39) to the apex (8b) of the curve and radially inwardly from the apex and downwardly along said side wall until said curve merges with said side wall.

23. A storage tray, as claimed in claim 20, wherein the cross sectional shape of said protrusion (8; 22; 38) in a radially extending vertical plane perpendicular to said base (2; 28; 40) is a curve extending radially outwardly from the top surface of the free end (6a; 20a; 36a) of each finger (6; 20; 36) and downwardly along said side wall (10; 29; 39) to the apex (8b) of the curve and radially inwardly from the apex and downwardly along said side wall until said curve merges with said side wall.

24. A storage tray, as claimed in claim 16, including at least one generally L-shaped slit (50) in said raised circular hub (14; 18; 34)for defining said at least one circumferentially extending finger (6; 20; 36), the number of L-shaped slits (50) corresponding to the number of said fingers, each said L-shaped slit (50) comprising a first leg slit (50a) extending generally radially through said side wall (10; 29; 39) and a second leg slit (50b) extending, from the end of said first leg slit, generally parallel to said side wall (10; 29; 39), whereby said circumferentially extending finger (6; 20; 36) is defined between said side wall and said second leg slit with said free end (6a; 20a; 36a) adjacent said first leg slit.

25. A storage tray, as claimed in claim 16, further including an integrally formed rib (44) on the underside of each finger (36).

26. A storage tray, as claimed in claim 25, wherein said rib (44) extends radially through the fixed end of said finger (36).

27. A storage tray, as claimed in claim 16, wherein said at least one finger comprises a plurality of fingers (6; 20; 36), and further including a plurality of apertures (12; 26; 32) defined in said base (2; 28; 40), and each finger (6; 20; 36) being arranged so that the free end (6a; 20a; 36a) thereof overhangs a corresponding one of said apertures (12; 26; 32) for permitting said free end to substantially unobstructedly deflect when said disc is inserted on said hub (14; 18; 34).

28. A storage tray, as claimed in claim 27, wherein the diameter of said raised circular hub (14; 18; 34) is slightly larger than the diameter of said disc central aperture, wherein the top surface of the free end (6a; 20a; 36a) of each finger (6; 20; 36) adjacent the side wall (10; 29; 39) of the hub (14; 18; 34) is curved outwardly and downwardly and wherein the cross sectional shape of said protrusion (8; 22; 38) in a radially extending vertical plane perpendicular to said base (2; 28; 40) is a curve extending radially outwardly from the top surface of the free end (6a; 20a; 36a) of each finger (6; 20; 36) and downwardly along said side wall (10; 29; 39) to the apex (8b) of the curve and radially inwardly from the apex and downwardly along said side wall until said curve merges with said side wall.

29. A storage tray, as claimed in claim 16, including at least four resilient, arcuate, circumferentially extending fingers (6; 20; 36) integral with said hub (14; 18; 34).

30. A storage tray, as claimed in claim 18, wherein said at least one finger (6; 20; 36) includes a radially extending protrusion (8; 22; 38) on the free end (6a; 20a; 36a) thereof projecting outwardly beyond the outside diameter of said hub (14; 18; 34) for engaging a bottom perimetric edge of the disc central aperture when the disc is placed on the hub (14; 18; 34) for causing said at least one finger (6; 20; 36) to move radially inwardly, said protrusion (8; 22; 38) being adapted to resiliently engage a top perimetric edge of the disc central aperture after said disc slides downwardly over said protrusion for removably securing said disc onto said hub.

## Patentansprüche

1. Scheibenhalteglied zum Sichern wenigstens eines scheibenförmigen Elements mit einer zentralen Öffnung, **dadurch gekennzeichnet, daß** es folgendes aufweist:
a) eine erhöhte kreisförmige Nabe (14; 18; 34) mit einer im wesentlichen zylindrischen Seitenwand, wobei die Nabe von einer ebenen Basis (2; 28; 40) nach oben ragt;
b) wenigstens einen nachgiebigen, gekrümmten, sich umfangsmäßig erstreckenden Finger (6; 20; 36), der mit der Nabe einstückig ausgebildet ist und sich entlang des Umfangs der Nabe erstreckt, wobei jeder Finger (6; 20; 36) ein erstes Ende (6b; 20b; 36b), das mit der Nabe einstückig ausgebildet ist, und ein freies Ende (6a; 20a; 36a) hat, das von der Nabe und der Basis getrennt ist, um eine radiale Auslenkung zuzulassen, wobei das freie Ende (6a; 20a; 36a) des wenigstens einen Fingers (6; 20; 36) von dem Umfang der Nabe (14; 18; 34) in einer zu der Basis parallelen Ebene im wesentlichen ohne Auslenkung des Fingers in axialer Richtung der Nabe nachgiebig radial nach innen auslenkbar ist;
c) wobei der Umfangsrand der zentralen Scheibenöffnung an dem wenigstens einen Finger (6; 20; 36) angreift, wenn die Scheibe auf der Nabe (14; 18; 34) angeordnet ist, womit bewirkt wird, daß sich der wenigstens eine Finger (6; 20; 36) ohne wesentliche axiale Bewegung des Fingers von dem Umfang der Nabe (14; 18; 34) radial nach innen bewegt, um zuzulassen, daß die zentrale Scheibenöffnung nach unten über die Nabe gleitet, wobei der wenigstens eine Finger (6; 20; 36) nachgiebig an dem Umfangsrand der zentralen Scheibenöffnung angreift, um die Scheibe auf der Nabe (14; 18; 34) am Platz zu halten.

2. Scheibenhalteglied nach Anspruch 1, bei welchem jeder Finger (6; 20; 36) an dem freien Ende (6a; 20a; 36a) einen sich radial erstreckenden Ansatz (8; 22; 38) umfaßt, der über den Außendurchmesser der Nabe (14; 18; 34) hinaus nach außen ragt, um an einem unteren Umfangsrand der zentralen Scheibenöffnung anzugreifen, wenn die Scheibe auf der Nabe (14; 18; 34) angeordnet ist, um zu bewirken, daß sich der wenigstens eine Finger (6; 20; 36) gekrümmt nach innen bewegt, wobei der Ansatz (8; 22; 38) dazu geeignet ist, an einem oberen Umfangsrand der zentralen Scheibenöffnung nachgiebig anzugreifen, nachdem die Scheibe über die Ansätze nach unten gleitet, um die Scheibe entfernbar auf der Nabe zu sichern.

3. Scheibenhalteglied nach Anspruch 1, bei welchem der wenigstens eine Finger mehrere Finger (6; 20; 36) aufweist und welches ferner mehrere in der Basis (2; 28; 40) gebildete Öffnungen (12; 26; 32) umfaßt, und bei welchem jeder Finger (6; 20; 36) derart angeordnet ist, daß sein freies Ende (6a; 20a; 36a) über eine entsprechende Öffnung (12; 26; 32) hängt, damit das freie Ende im wesentlichen ungehindert ausgelenkt werden kann, wenn die Scheibe auf die Nabe (14; 18; 34) eingesetzt wird.

4. Scheibenhalteglied nach Anspruch 3, bei welchem die Öffnungen (12; 26; 32) in regelmäßig beabstandeten Intervallen um den Umfang der Nabe (14; 18; 34) liegen.

5. Scheibenhalteglied nach Anspruch 2, bei welchem der Durchmesser der erhöhten kreisförmigen Nabe (14; 18; 34) etwas größer als der Durchmesser der zentralen Scheibenöffnung ist.

6. Scheibenhalteglied nach Anspruch 5, bei welchem die obere Fläche des freien Endes (6a; 20a; 36a) jedes Fingers (6; 20; 36), die an die Seitenwand (10; 29; 39) der Nabe (14; 18; 34) angrenzt, nach außen und nach unten gekrümmt ist.

7. Scheibenhalteglied nach Anspruch 2, bei welchem die Querschnittsform des Ansatzes (8; 22; 38) in einer sich senkrecht zu der Basis (2; 28; 40) radial erstreckenden vertikalen Ebene eine Kurve ist, die sich von der oberen Fläche des freien Endes (6a; 20a; 36a) jedes Fingers (6; 20; 36) radial nach außen und nach unten entlang der Seitenwand (10; 29; 39) zu dem Scheitel (8b) der Kurve und von dem Scheitel radial nach innen und nach unten entlang der Seitenwand erstreckt, bis die Kurve mit der Seitenwand zusammengeht.

8. Scheibenhalteglied nach Anspruch 5, bei welchem die Querschnittsform des Ansatzes (8; 22; 38) in einer sich senkrecht zu der Basis (2; 28; 40) radial erstreckenden vertikalen Ebene eine Kurve ist, die sich von der oberen Fläche des freien Endes (6a; 20a; 36a) jedes Fingers (6; 20; 36) radial nach außen und nach unten entlang der Seitenwand (10; 29; 39) zu dem Scheitel (8b) der Kurve und von dem Scheitel radial nach innen und nach unten entlang der Seitenwand erstreckt, bis die Kurve mit der Seitenwand zusammengeht.

9. Scheibenhalteglied nach Anspruch 3, bei welchem jeder Finger (6; 20; 36) an seinem freien Ende (6a; 20a; 36a) einen sich radial erstreckenden Ansatz (8; 22; 38) umfaßt, der über den Außendurchmesser der Nabe (14; 18; 34) hinaus nach außen ragt, und die Querschnittsform des Ansatzes (8; 22; 38) in einer sich senkrecht zu der Basis (2; 28; 40) radial erstreckenden vertikalen Ebene eine Kurve ist, die sich von der oberen Fläche des freien Endes (6a; 20a; 36a) jedes Fingers (6; 20; 36) radial nach außen und nach unten entlang der Seitenwand (10; 29; 39) zu dem Scheitel (8b) der Kurve und von dem Scheitel radial nach innen und nach unten entlang der Seitenwand erstreckt, bis die Kurve mit der Seitenwand zusammengeht.

10. Scheibenhalteglied nach Anspruch 1, das wenigstens einen allgemein L-förmigen Schlitz (50) in der erhöhten kreisförmigen Nabe (14; 18; 34) umfaßt, um den wenigstens einen sich umfangsmäßig erstreckenden Finger (6; 20; 36) zu bilden, wobei die Anzahl der L-förmigen Schlitze (50) der Anzahl der Finger entspricht, jeder L-förmige Schlitz (50) einen ersten Schenkelschlitz (50a), der sich allgemein radial durch die Seitenwand (10; 29; 39) erstreckt, und einen zweiten Schenkelschlitz (50b) aufweist, der sich von dem Ende des ersten Schenkelschlitzes allgemein parallel zu der Seitenwand (10; 29; 39) erstreckt, wodurch der sich umfangsmäßig erstreckende Finger (6; 20; 36) zwischen der Seitenwand und dem zweiten Schenkelschlitz gebildet ist, wobei das freie Ende (6a; 20a; 36a) an den ersten Schenkelschlitz angrenzt.

11. Scheibenhalteglied nach Anspruch 1, das ferner eine einstückig ausgebildete Rippe (44) an der Unterseite jedes Fingers (36) umfaßt.

12. Scheibenhalteglied nach Anspruch 11, bei welchem sich die Rippe (44) radial durch das festgelegte Ende des Fingers (36) erstreckt.

13. Scheibenhalteglied nach Anspruch 1, das ferner wenigstens eine in der Basis (2; 28; 40) gebildete Öffnung (12; 26; 32) umfaßt, wobei die Anzahl der Öffnungen der Anzahl der Finger (6; 20; 36) entspricht, wobei die Finger derart angeordnet sind, daß ihre freien Enden (6a; 20a; 36a) über die Öffnungen hängen, damit die freien Enden im wesentlichen ungehindert ausgelenkt werden können, wenn die Scheibe auf die Nabe (14; 18; 34) eingesetzt wird, und wobei jeder Finger (6; 20; 36) an dem freien Ende einen sich radial erstreckenden Ansatz (8; 22; 38) umfaßt, der über den Außendurchmesser der Nabe (14; 18; 34) hinaus nach außen ragt, um an einem unteren Umfangsrand der zentralen Scheibenöffnung anzugreifen, wenn die Scheibe auf der Nabe angeordnet ist, um zu bewirken, daß sich die Finger (6; 20; 36) gekrümmt nach innen bewegen, wobei die Ansätze (8; 22; 38) dazu geeignet sind, an einem oberen Umfangsrand der zentralen Scheibenöffnung nachgiebig anzugreifen, nachdem die Scheibe über die Ansätze nach unten gleitet, um die Scheibe entfernbar auf der Nabe (14; 18; 34) zu sichern.

14. Scheibenhalteglied nach Anspruch 13, bei welchem der Durchmesser der erhöhten kreisförmigen Nabe (14; 18; 34) etwas größer als der Durchmesser der zentralen Scheibenöffnung ist, wobei die obere Fläche des freien Endes (6a; 20a; 36a) jedes Fingers (6; 20; 36), die an die Seitenwand (10; 29; 39) der Nabe (14; 18; 34) angrenzt, nach außen und nach unten gekrümmt ist, und wobei die Querschnittsform des Ansatzes (8; 22; 38) in einer sich senkrecht zu der Basis (2; 28; 40) radial erstreckenden vertikalen Ebene eine Kurve ist, die sich von der oberen Fläche des freien Endes (6a; 20a; 36a) jedes Fingers (6; 20; 36) radial nach außen und nach unten entlang der Seitenwand (10; 29; 39) zu dem Scheitel (8b) der Kurve und von dem Scheitel radial nach innen und nach unten entlang der Seitenwand erstreckt, bis die Kurve mit der Seitenwand zusammengeht.

15. Scheibenhalteglied nach Anspruch 1, das wenigstens vier nachgiebige, gekrümmte, sich umfangsmäßig erstreckende Finger (6; 20; 36) umfaßt, die mit der Nabe (14; 18; 34) einstückig ausgebildet sind.

16. Speicherschale zum Speichern und Sichern wenigstens eines scheibenförmigen Elements mit einer zentralen Öffnung, wobei die Schale eine im wesentlichen ebene Basis mit einem damit einstückig ausgebildeten Scheibenhalteglied aufweist, **dadurch gekennzeichnet, daß** das Glied folgendes aufweist:
a) eine erhöhte kreisförmige Nabe (14; 18; 34) mit einer im wesentlichen zylindrischen Seitenwand, wobei die Nabe von der ebenen Basis (2; 28; 40) nach oben ragt;
b) wenigstens einen nachgiebigen, gekrümmten, sich umfangsmäßig erstreckenden Finger (6; 20; 36), der mit der Nabe einstückig ausgebildet ist und sich entlang des Umfangs der Nabe erstreckt, wobei jeder Finger (6; 20; 36) ein erstes Ende (6b; 20b; 36b), das mit der Nabe einstückig ausgebildet ist, und ein freies Ende (6a; 20a; 36a) hat, das von der Nabe und der Basis getrennt ist, um eine radiale Auslenkung zuzulassen, wobei das freie Ende (6a; 20a; 36a) des wenigstens einen Fingers (6; 20; 36) von dem Umfang der Nabe (14; 18; 34) in einer zu der Basis parallelen Ebene im wesentlichen ohne Auslenkung des Fingers in axialer Richtung der Nabe nachgiebig radial nach innen auslenkbar ist;
c) wobei der Umfangsrand der zentralen Scheibenöffnung an dem wenigstens einen Finger (6; 20; 36) angreift, wenn die Scheibe auf der Nabe (14; 18; 34) angeordnet ist, womit bewirkt wird, daß sich der wenigstens eine Finger (6; 20; 36) ohne wesentliche axiale Bewegung des Fingers von dem Umfang der Nabe (14; 18; 34) radial nach innen bewegt, um zuzulassen, daß die zentrale Scheibenöffnung nach unten über die Nabe gleitet, wobei der wenigstens eine Finger (6; 20; 36) nachgiebig an dem Umfangsrand der zentralen Scheibenöffnung angreift, um die Scheibe auf der Nabe (14; 18; 34) am Platz zu halten.

17. Speicherschale nach Anspruch 16, bei welcher der wenigstens eine Finger (6; 20; 36) an dem freien Ende (6a; 20a; 36a) einen sich radial erstreckenden Ansatz (8; 22; 38) umfaßt, der über den Außendurchmesser der Nabe (14; 18; 34) hinaus nach außen ragt, um an einem unteren Umfangsrand der zentralen Scheibenöffnung anzugreifen, wenn die Scheibe auf der Nabe (14; 18; 34) angeordnet ist, um zu bewirken, daß sich der wenigstens eine Finger (6; 20; 36) radial nach innen bewegt, wobei der Ansatz (8; 22; 38) dazu geeignet ist, an einem oberen Umfangsrand der zentralen Scheibenöffnung nachgiebig anzugreifen, nachdem die Scheibe über den Ansatz nach unten gleitet, um die Scheibe entfernbar auf der Nabe zu sichern.

18. Speicherschale nach Anspruch 16, bei welcher der wenigstens eine Finger mehrere Finger (6; 20; 36) aufweist und die ferner mehrere in der Basis (2; 28; 40) gebildete Öffnungen (12; 26; 32) umfaßt, und bei welcher jeder Finger (6; 20; 36) derart angeordnet ist, daß sein freies Ende (6a; 20a; 36a) über eine entsprechende Öffnung (12; 26; 32) hängt, damit das freie Ende im wesentlichen ungehindert ausgelenkt werden kann, wenn die Scheibe auf die Nabe (14; 18; 34) eingesetzt wird.

19. Speicherschale nach Anspruch 18, bei welcher die Öffnungen (12; 26; 32) in regelmäßig beabstandeten Intervallen um den Umfang der Nabe (14; 18; 34) liegen.

20. Speicherschale nach Anspruch 17, bei welcher der Durchmesser der erhöhten kreisförmigen Nabe (14; 18; 34) etwas größer als der Durchmesser der zentralen Scheibenöffnung ist.

21. Speicherschale nach Anspruch 20, bei welcher die obere Fläche des freien Endes (6a; 20a; 36a) jedes Fingers (6; 20; 36), die an die Seitenwand (10; 29; 39) der Nabe (14; 18; 34) angrenzt, nach außen und nach unten gekrümmt ist.

22. Speicherschale nach Anspruch 17, bei welcher die Querschnittsform des Ansatzes (8; 22; 38) in einer sich senkrecht zu der Basis (2; 28; 40) radial erstreckenden vertikalen Ebene eine Kurve ist, die sich von der oberen Fläche des freien Endes (6a; 20a; 36a) jedes Fingers (6; 20; 36) radial nach außen und nach unten entlang der Seitenwand (10; 29; 39) zu dem Scheitel (8b) der Kurve und von dem Scheitel radial nach innen und nach unten entlang der Seitenwand erstreckt, bis die Kurve mit der Seitenwand zusammengeht.

23. Speicherschale nach Anspruch 20, bei welcher die Querschnittsform des Ansatzes (8; 22; 38) in einer sich senkrecht zu der Basis (2; 28; 40) radial erstreckenden vertikalen Ebene eine Kurve ist, die sich von der oberen Fläche des freien Endes (6a; 20a; 36a) jedes Fingers (6; 20; 36) radial nach außen und nach unten entlang der Seitenwand (10; 29; 39) zu dem Scheitel (8b) der Kurve und von dem Scheitel radial nach innen und nach unten entlang der Seitenwand erstreckt, bis die Kurve mit der Seitenwand zusammengeht.

24. Speicherschale nach Anspruch 16, die wenigstens einen allgemein L-förmigen Schlitz (50) in der erhöhten kreisförmigen Nabe (14; 18; 34) umfaßt, um den wenigstens einen sich umfangsmäßig erstreckenden Finger (6; 20; 36) zu bilden, wobei die Anzahl der L-förmigen Schlitze (50) der Anzahl der Finger entspricht, jeder L-förmige Schlitz (50) einen ersten Schenkelschlitz (50a), der sich allgemein radial durch die Seitenwand (10; 29; 39) erstreckt, und einen zweiten Schenkelschlitz (50b) aufweist, der sich von dem Ende des ersten Schenkelschlitzes allgemein parallel zu der Seitenwand (10; 29; 39) erstreckt, wodurch der sich umfangsmäßig erstreckende Finger (6; 20; 36) zwischen der Seitenwand und dem zweiten Schenkelschlitz gebildet ist, wobei das freie Ende (6a; 20a; 36a) an den ersten Schenkelschlitz angrenzt.

25. Speicherschale nach Anspruch 16, die ferner eine einstückig ausgebildete Rippe (44) an der Unterseite jedes Fingers (36) umfaßt.

26. Speicherschale nach Anspruch 25, bei welcher sich die Rippe (44) radial durch das festgelegte Ende des Fingers (36) erstreckt.

27. Speicherschale nach Anspruch 16, bei welcher der wenigstens eine Finger mehrere Finger (6; 20; 36) aufweist und die ferner mehrere in der Basis (2; 28; 40) gebildete Öffnungen (12; 26; 32) umfaßt, und wobei jeder Finger (6; 20; 36) derart angeordnet ist, daß sein freies Ende (6a; 20a; 36a) über eine entspechende Öffnung (12; 26; 32) hängt, damit das freie Ende im wesentlichen ungehindert ausgelenkt werden kann, wenn die Scheibe auf die Nabe (14; 18; 34) eingesetzt wird.

28. Speicherschale nach Anspruch 27, bei welcher der Durchmesser der erhöhten kreisförmigen Nabe (14; 18; 34) etwas größer als der Durchmesser der zentralen Scheibenöffnung ist, wobei die obere Fläche des freien Endes (6a; 20a; 36a) jedes Fingers (6; 20; 36), die an die Seitenwand (10; 29; 39) der Nabe (14; 18; 34) angrenzt, nach außen und nach unten gekrümmt ist, und wobei die Querschnittsform des Ansatzes (8; 22; 38) in einer sich senkrecht zu der Basis (2; 28; 40) radial erstreckenden vertikalen Ebene eine Kurve ist, die sich von der oberen Fläche des freien Endes (6a; 20a; 36a) jedes Fingers (6; 20; 36) radial nach außen und nach unten entlang der Seitenwand (10; 29; 39) zu dem Scheitel (8b) der Kurve und von dem Scheitel radial nach innen und nach unten entlang der Seitenwand erstreckt, bis die Kurve mit der Seitenwand zusammengeht.

29. Speicherschale nach Anspruch 16, die wenigstens vier nachgiebige, gekrümmte, sich umfangsmäßig erstreckende Finger (6; 20; 36) umfaßt, die mit der Nabe (14; 18; 34) einstückig ausgebildet sind.

30. Speicherschale nach Anspruch 18, bei welcher der wenigstens eine Finger (6; 20; 36) an dem freien Ende (6a; 20a; 36a) einen sich radial erstreckenden Ansatz (8; 22; 38) umfaßt, der über den Außendurchmesser der Nabe (14; 18; 34) hinaus nach außen ragt, um an einem unteren Umfangsrand der zentralen Scheibenöffnung anzugreifen, wenn die Scheibe auf der Nabe (14; 18; 34) angeordnet ist, um zu bewirken, daß sich der wenigstens eine Finger (6; 20; 36) radial nach innen bewegt, wobei der Ansatz (8; 22; 38) dazu geeignet ist, nachgiebig an einem oberen Umfangsrand der zentralen Scheibenöffnung anzugreifen, nachdem die Scheibe über den Ansatz nach unten gleitet, um die Scheibe entfernbar auf der Nabe zu sichern.

## Revendications

1. Elément de maintien de disque destiné à fixer au moins un élément en forme de disque comportant une ouverture centrale, **caractérisé en ce qu'**il comprend :
a) un moyeu circulaire surélevé (14 ; 18; 34) présentant une paroi latérale sensiblement cylindrique, ledit moyeu faisant saillie vers le haut depuis une base plane (2 ; 28 ; 40),
b) au moins un doigt élastique (6 ; 20 ; 36), de forme arquée, s'étendant circonférentiellement, formé d'une seule pièce avec ledit moyeu et s'étendant le long du périmètre dudit moyeu, chaque doigt (6 ; 20 ; 36) ayant une première extrémité (6b ; 20b ; 36b)formée d'une seule pièce avec ledit moyeu et une extrémité libre (6a ; 20a; 36a) qui est séparée dudit moyeu et de ladite base afin de permettre un fléchissement radial de celle-ci, l'extrémité libre (6a ; 20a ; 36a) dudit au moins un doigt (6 ; 20 ; 36) pouvant fléchir de façon élastique radialement vers l'intérieur depuis le périmètre du moyeu (14 ; 18 ; 34) dans un plan parallèle à ladite base, avec pratiquement aucun fléchissement dudit doigt dans la direction axiale dudit moyeu ;
c) grâce à quoi le bord périmétrique de l'ouverture centrale du disque vient en contact avec ledit au moins un doigt (6 ; 20 ; 36) lorsque le disque est placé sur ledit moyeu (14 ; 18 ; 34) en amenant ledit au moins un doigt (6 ; 20 ; 36) à se déplacer radialement vers l'intérieur depuis le périmètre du moyeu (14 ; 18 ; 34) avec pratiquement aucun mouvement axial dudit doigt, afin de permettre que l'ouverture centrale du disque glisse vers le bas sur ledit moyeu, ledit au moins un doigt (6 ; 20 ; 36) venant en contact élastique avec le bord périmétrique de l'ouverture centrale du disque afin de maintenir le disque en place sur le moyeu (14 ; 18 ; 34).

2. Elément de maintien de disque, selon la revendication 1, dans lequel chaque dit doigt (6 ; 20 ; 36) comprend une saillie (8 ; 22 ; 38) s'étendant radialement sur l'extrémité libre (6a ; 20a ; 36a) de celui-ci faisant saillie vers l'extérieur au-delà du diamètre extérieur dudit moyeu (14 ; 18 ; 34) en vue de venir en contact avec un bord périmétrique inférieur de l'ouverture centrale du disque lorsque le disque est placé sur le moyeu (14 ; 18 ; 34) en vue d'amener ledit au moins un doigt (6 ; 20 ; 36) à se déplacer suivant un arc vers l'intérieur, ladite saillie (8 ; 22 ; 38) étant conçue pour venir en contact élastique avec un bord périmétrique supérieur de l'ouverture centrale du disque après que ledit disque a glissé vers le bas sur lesdites saillies afin de fixer de façon amovible ledit disque sur ledit moyeu.

3. Elément de maintien de disque, selon la revendication 1, dans lequel ledit au moins un doigt comprend une pluralité de doigts (6 ; 20 ; 36), et comprenant en outre une pluralité d'ouvertures (12 ; 26; 32) définies dans ladite base (2 ; 28 ; 40), et chaque doigt (6 ; 20 ; 36) étant agencé de sorte que l'extrémité libre (6a-; 20a ; 36a) de celui-ci soit en surplomb d'une ouverture correspondante parmi lesdites ouvertures (12 ; 26 ; 32) afin de permettre que ladite extrémité libre fléchisse pratiquement sans obstacle lorsque ledit disque est inséré sur ledit moyeu (14 ; 18; 34).

4. Elément de maintien de disque, selon la revendication 3, dans lequel lesdites ouvertures (12 ; 26 ; 32) sont situées à des intervalles régulièrement espacés le long de la circonférence dudit moyeu (14 ; 18; 34).

5. Elément de maintien de disque, selon la revendication 2, dans lequel le diamètre dudit moyeu (14; 18 ; 34) circulaire surélevé est légèrement plus grand que le diamètre de ladite ouverture centrale du disque.

6. Elément de maintien de disque, selon la revendication 5, dans lequel la surface supérieure de l'extrémité libre (6a ; 20a ; 36a) de chaque doigt (6 ; 20 ; 36) adjacent à la paroi latérale (10 ; 29 ; 39) du moyeu (14 ; 18 ; 34), est incurvée vers l'extérieur et vers le bas.

7. Elément de maintien de disque, selon la revendication 2, dans lequel la forme de section transversale de ladite saillie (8 ; 22 ; 38) dans un plan vertical s'étendant radialement et perpendiculairement à ladite base (2 ; 28 ; 40) est une courbe s'étendant radialement vers l'extérieur depuis la surface supérieure de l'extrémité libre (6a ; 20a ; 36a) de chaque doigt (6 ; 20 ; 36) et vers le bas le long de ladite paroi latérale (10 ; 29 ; 39) vers le sommet (8b) de la courbe, et radialement vers l'intérieur depuis le sommet et vers le bas le long de ladite paroi latérale jusqu'à ce que ladite courbe se raccorde à ladite paroi latérale.

8. Elément de maintien de disque, selon la revendication 5, dans lequel la forme de section transversale de ladite saillie (8 ; 22 ; 38) dans un plan vertical s'étendant radialement et perpendiculairement à ladite base (2 ; 28 ; 40) est une courbe s'étendant radialement vers l'extérieur depuis la surface supérieure de l'extrémité libre (6a ; 20a ; 36a) de chaque doigt (6 ; 20 ; 36) et vers le bas le long de ladite paroi latérale (10 ; 29 ; 39) vers le sommet (8b) de la courbe, et radialement vers l'intérieur depuis le sommet et vers le bas le long de ladite paroi latérale jusqu'à ce que ladite courbe se raccorde à ladite paroi latérale.

9. Elément de maintien de disque, selon la revendication 3, dans lequel chaque dit doigt (6 ; 20 ; 36) comprend une saillie (8 ; 22 ; 38) s'étendant radialement sur l'extrémité libre (6a ; 20a ; 36a) de celui-ci, faisant saillie vers l'extérieur au-delà du diamètre extérieur dudit moyeu (14 ; 18 ; 34), et la forme de section transversale de ladite saillie (8 ; 22; 38) dans un plan vertical s'étendant radialement et perpendiculairement à ladite base (2 ; 28 ; 40) est une courbe s'étendant radialement vers l'extérieur depuis la surface supérieure de l'extrémité libre (6a ; 20a ; 36a) de chaque doigt (6 ; 20 ; 36) et vers le bas le long de ladite paroi latérale (10 ; 29 ; 39) vers le sommet (8b) de la courbe, et radialement vers l'intérieur depuis le sommet et vers le bas le long de ladite paroi latérale jusqu'à ce que ladite courbe se raccorde à ladite paroi latérale.

10. Elément de maintien de disque, selon la revendication 1, comprenant au moins une fente (50) sensiblement en forme de L ménagée dans ledit moyeu (14; 18 ; 34) circulaire surélevé, destinée à définir ledit au moins un doigt (6 ; 20 ; 36) s'étendant circonférentiellement, le nombre de fentes en forme de L (50) correspondant au nombre desdits doigts, chaque dite fente en forme de L (50) comprenant un premier segment de fente (50a) s'étendant sensiblement radialement au travers de ladite paroi latérale (10 ; 29 ; 39) et un second segment de fente (50b) s'étendant, depuis l'extrémité dudit premier segment de fente, sensiblement parallèlement à ladite paroi latérale (10 ; 29 ; 39), grâce à quoi ledit doigt (6 ; 20 ; 36) s'étendant circonférentiellement est défini entre ladite paroi latérale et ledit second segment de fente, ladite extrémité libre (6a ; 20a ; 36a) étant adjacente audit premier segment de fente.

11. Elément de maintien de disque, selon la revendication 1, comprenant en outre une nervure (44) formée d'une seule pièce sur le côté inférieur de chaque doigt (36).

12. Elément de maintien de disque, selon la revendication 11, dans lequel ladite nervure (44) s'étend radialement au travers de l'extrémité fixe dudit doigt (36).

13. Elément de maintien de disque, selon la revendication 1, comprenant en outre au moins une ouverture (12 ; 26 ; 32) définie dans ladite base (2 ; 28 ; 40), le nombre d'ouvertures correspondant au nombre desdits doigts (6 ; 20 ; 36), lesdits doigts étant agencés de sorte que les extrémités libres (6a ; 20a ; 36a) de ceux-ci surplombent lesdites ouvertures afin de permettre que lesdites extrémités libres fléchissent pratiquement sans obstacle lorsque ledit disque est inséré sur ledit moyeu (14 ; 18 ; 34), et dans lequel chaque doigt (6 ; 20 ; 36) comprend une saillie (8 ; 22; 38) s'étendant radialement sur l'extrémité libre de celui-ci, faisant saillie vers l'extérieur au-delà du diamètre extérieur dudit moyeu (14 ; 18 ; 34) en vue de venir en contact avec un bord périmétrique inférieur de l'ouverture centrale du disque lorsque le disque est placé sur le moyeu en vue d'amener lesdits doigts (6 ; 20 ; 36) à se déplacer suivant un arc vers l'intérieur, lesdites saillies (8 ; 22 ; 38) étant conçues pour venir en contact élastique avec un bord périmétrique supérieur de l'ouverture centrale du disque après que ledit disque a glissé vers le bas sur lesdites saillies afin de fixer de façon amovible ledit disque sur ledit moyeu (14; 18 ; 34).

14. Elément de maintien de disque, selon la revendication 13, dans lequel le diamètre dudit moyeu (14 ; 18 ; 34) circulaire surélevé est légèrement plus grand que le diamètre de ladite ouverture centrale du disque, dans lequel la surface supérieure de l'extrémité libre (6a ; 20a ; 36a) de chaque doigt (6 ; 20 ; 36) adjacent à la paroi latérale (10 ; 29 ; 39) du moyeu (14; 18 ; 34) est incurvée vers l'extérieur et vers le bas, et dans lequel la forme de section transversale de ladite saillie (8 ; 22 ; 38) dans un plan vertical s'étendant radialement et perpendiculairement à ladite base (2 ; 28 ; 40) est une courbe s'étendant radialement vers l'extérieur depuis la surface supérieure de l'extrémité libre (6a ; 20a ; 36a) de chaque doigt (6 ; 20 ; 36) et vers le bas le long de ladite paroi latérale (10 ; 29 ; 39) vers le sommet (8b) de la courbe, et radialement vers l'intérieur depuis le sommet et vers le bas le long de ladite paroi latérale jusqu'à ce que ladite courbe se raccorde à ladite paroi latérale.

15. Elément de maintien de disque, selon la revendication 1, comprenant au moins quatre doigts élastiques (6 ; 20 ; 36), de forme arquée, s'étendant circonférentiellement, d'une seule pièce avec ledit moyeu (14 ; 18 ; 34).

16. Bac de stockage destiné à stocker et à fixer au moins un élément en forme de disque comportant une ouverture centrale, ledit bac comprenant une base sensiblement plane comprenant un élément de maintien de disque faisant partie intégrante de celle-ci, **caractérisé en ce que** ledit élément comprend :
a) un moyeu circulaire surélevé (14 ; 18 ; 34) présentant une paroi latérale sensiblement cylindrique, ledit moyeu faisant saillie vers le haut depuis ladite base plane (2 ; 28 ; 40) ;
b) au moins un doigt élastique (6 ; 20 ; 36), de forme arquée, s'étendant circonférentiellement, formé d'une seule pièce avec ledit moyeu et s'étendant le long du périmètre dudit moyeu, chaque doigt (6 ; 20 ; 36) ayant une première extrémité (6b ; 20b ; 36b) formée d'une seule pièce avec ledit moyeu et une extrémité libre (6a ; 20a ; 36a) qui est séparée dudit moyeu et de ladite base afin de permettre un fléchissement radial de celle-ci, l'extrémité libre (6a ; 20a ; 36a) dudit au moins un doigt (6 ; 20 ; 36) pouvant fléchir de façon élastique radialement vers l'intérieur depuis le périmètre du moyeu (14 ; 18 ; 34) dans un plan parallèle à ladite base, avec pratiquement aucun fléchissement dudit doigt dans la direction axiale dudit moyeu ;
c) grâce à quoi le bord périmétrique de l'ouverture centrale du disque vient en contact avec ledit au moins un doigt (6 ; 20 ; 36) lorsque le disque est placé sur ledit moyeu (14 ; 18 ; 34) en amenant ledit au moins un doigt (6 ; 20 ; 36) à se déplacer radialement vers l'intérieur depuis le périmètre du moyeu (14 ; 18 ; 34) avec pratiquement aucun mouvement axial dudit doigt, afin de permettre que l'ouverture centrale du disque glisse vers le bas sur ledit moyeu, ledit au moins un doigt (6 ; 20 ; 36) venant en contact élastique avec le bord périmétrique de l'ouverture centrale du disque afin de maintenir le disque en place sur le moyeu (14 ; 18 ; 34).

17. Bac de stockage, selon la revendication 16, dans lequel ledit au moins un doigt (6 ; 20 ; 36) comprend une saillie (8 ; 22 ; 38) s'étendant radialement sur l'extrémité libre (6a ; 20a ; 36a) de celui-ci faisant saillie vers l'extérieur au-delà du diamètre extérieur dudit moyeu (14 ; 18 ; 34) en vue de venir en contact avec un bord périmétrique inférieur de l'ouverture centrale du disque lorsque le disque est placé sur le moyeu (14 ; 18 ; 34) afin d'amener ledit au moins un doigt (6 ; 20 ; 36) à se déplacer radialement vers l'intérieur, ladite saillie (8 ; 22 ; 38) étant conçue pour venir en contact élastique avec un bord périmétrique supérieur de l'ouverture centrale du disque après que ledit disque a glissé vers le bas sur ladite saillie afin de fixer de façon amovible ledit disque sur ledit moyeu.

18. Bac de stockage, selon la revendication 16, dans lequel ledit au moins un doigt comprend une pluralité de doigts (6 ; 20 ; 36), et comprenant en outre une pluralité d'ouvertures (12 ; 26 ; 32) définies dans ladite base (2 ; 28 ; 40), et chaque doigt (6 ; 20; 36) étant agencé de sorte que l'extrémité libre (6a ; 20a ; 36a) de celui-ci surplombe une ouverture correspondante parmi lesdites ouvertures (12 ; 26 ; 32) en vue de permettre que ladite extrémité libre fléchisse pratiquement sans obstacle lorsque ledit disque est inséré sur ledit moyeu (14 ; 18 ; 34).

19. Bac de stockage, selon la revendication 18, dans lequel lesdites ouvertures (12 ; 26 ; 32) sont situées à des intervalles régulièrement espacés le long de la circonférence dudit moyeu (14 ; 18 ; 34).

20. Bac de stockage, selon la revendication 17, dans lequel le diamètre dudit moyeu circulaire surélevé (14 ; 18 ; 34) est légèrement plus grand que le diamètre de ladite ouverture centrale du disque.

21. Bac de stockage, selon la revendication 20, dans lequel la surface supérieure de l'extrémité libre (6a ; 20a ; 36a) de chaque doigt (6 ; 20 ; 36), adjacente à la paroi latérale (10 ; 29 ; 39) du moyeu (14 ; 18 ; 34), est incurvée vers l'extérieur et vers le bas.

22. Bac de stockage, selon la revendication 17, dans lequel la forme de section transversale de ladite saillie (8 ; 22 ; 38) dans un plan vertical s'étendant radialement et perpendiculairement à ladite base (2 ; 28; 40) est une courbe s'étendant radialement vers l'extérieur depuis la surface supérieure de l'extrémité libre (6a ; 20a ; 36a) de chaque doigt (6 ; 20 ; 36) et vers le bas le long de ladite paroi latérale (10 ; 29 ; 39) vers le sommet (8b) de la courbe, et radialement vers l'intérieur depuis le sommet et vers le bas le long de ladite paroi latérale jusqu'à ce que ladite courbe se raccorde à ladite paroi latérale.

23. Bac de stockage, selon la revendication 20, dans lequel la forme de section transversale de ladite saillie (8 ; 22 ; 38) dans un plan vertical s'étendant radialement et perpendiculairement à ladite base (2 ; 28; 40) est une courbe s'étendant radialement vers l'extérieur depuis la surface supérieure de l'extrémité libre (6a ; 20a ; 36a) de chaque doigt (6 ; 20 ; 36) et vers le bas le long de ladite paroi latérale (10 ; 29 ; 39) vers le sommet (8b) de la courbe, et radialement vers l'intérieur depuis le sommet et vers le bas le long de ladite paroi latérale jusqu'à ce que ladite courbe se raccorde à ladite paroi latérale.

24. Bac de stockage, selon la revendication 16, comprenant au moins une fente (50) sensiblement en forme de L ménagée dans ledit moyeu circulaire surélevé (14 ; 18 ; 34), destinée à définir ledit au moins un doigt (6; 20 ; 36) s'étendant circonférentiellement, le nombre de fentes en forme de L (50) correspondant au nombre desdits doigts, chaque dite fente en forme de L (50) comprenant un premier segment de fente (50a) s'étendant sensiblement radialement au travers de ladite paroi latérale (10 ; 29 ; 39) et un second segment de fente (50b) s'étendant, depuis l'extrémité dudit premier segment de fente, sensiblement parallèlement à ladite paroi latérale (10 ; 29 ; 39), grâce à quoi ledit doigt s'étendant circonférentiellement (6 ; 20 ; 36) est défini entre ladite paroi latérale et ledit second segment de fente, ladite extrémité libre (6a ; 20a ; 36a) étant adjacente audit premier segment de fente.

25. Bac de stockage, selon la revendication 16, comprenant en outre une nervure (44) formée d'une seule pièce sur le côté inférieur de chaque doigt (36).

26. Bac de stockage, selon la revendication 25, dans lequel ladite nervure(44) s'étend radialement au travers de l'extrémité fixe dudit doigt (36).

27. Bac de stockage, selon la revendication 16, dans lequel ledit au moins un doigt comprend une pluralité de doigts (6 ; 20 ; 36), et comprenant en outre une pluralité d'ouvertures (12 ; 26 ; 32) définies dans ladite base (2 ; 28 ; 40), et chaque doigt (6 ; 20; 36)étant agencé de sorte que l'extrémité libre (6a ; 20a; 36a) de celui-ci surplombe une ouverture correspondante parmi lesdites ouvertures (12 ; 26 ; 32) en vue de permettre que ladite extrémité libre fléchisse pratiquement sans obstacle lorsque ledit disque est inséré sur ledit moyeu (14 ; 18 ; 34).

28. Bac de stockage, selon la revendication 27, dans lequel le diamètre dudit moyeu circulaire surélevé (14 ; 18 ; 34) est légèrement plus grand que le diamètre de ladite ouverture centrale du disque, dans lequel la surface supérieure de l'extrémité libre (6a ; 20a ; 36a) de chaque doigt(6 ; 20 ; 36) adjacente à la paroi latérale (10 ; 29 ; 39) du moyeu (14 ; 18 ; 34) est incurvée vers l'extérieur et vers le bas, et dans lequel la forme de section transversale de ladite saillie (8 ; 22 ; 38) dans un plan vertical s'étendant radialement et perpendiculairement à ladite base (2 ; 28 ; 40) est une courbe s'étendant radialement vers l'extérieur depuis la surface supérieure de l'extrémité libre (6a ; 20a ; 36a) de chaque doigt (6 ; 20 ; 36) et vers le bas le long de ladite paroi latérale (10 ; 29 ; 39) vers le sommet (8b) de la courbe, et radialement vers l'intérieur depuis le sommet et vers le bas le long de ladite paroi latérale jusqu'à ce que ladite courbe se raccorde à ladite paroi latérale.

29. Bac de stockage, selon la revendication 16, comprenant au moins quatre doigts élastiques (6 ; 20 ; 36), de forme arquée, s'étendant circonférentiellement, d'une seule pièce avec ledit moyeu (14 ; 18 ; 34).

30. Bac de stockage, selon la revendication 18, dans lequel ledit au moins un doigt (6 ; 20 ; 36) comprend une saillie (8 ; 22 ; 38) s'étendant radialement sur l'extrémité libre (6a ; 20a ; 36a) de celui-ci, faisant saillie vers l'extérieur au-delà du diamètre extérieur dudit moyeu (14 ; 18 ; 34) en vue de venir en contact avec un bord périmétrique inférieur de l'ouverture centrale du disque lorsque le disque est placé sur le moyeu (14 ; 18 ; 34) afin d'amener ledit au moins un doigt (6 ; 20 ; 36) à se déplacer radialement vers l'intérieur, ladite saillie (8 ; 22 ; 38) étant conçue pour venir en contact élastique avec un bord périmétrique supérieur de l'ouverture centrale du disque après que ledit disque a glissé vers le bas sur ladite saillie afin de fixer de façon amovible ledit disque sur ledit moyeu.
